# EUROPÄISCHE PATENTANMELDUNG

(11) **EP 4 512 565 A2**
(43) Veröffentlichungstag der Anmeldung: **26.02.2025**
(21) Anmeldenummer: 24187941.0
(22) Anmeldetag: 11.07.2024
(51) Int. Cl.: B23K 11/30

(54) **EINRICHTUNG ZUM ENTFERNEN VON ANHAFTUNGEN AN FÜGEWERKZEUGEN**

(30) Priorität: 22.08.2023 DE 202023104765 U
(71) Anmelder: Seipt, Rene, 09456 Annaberg-Buchholz (DE)
(72) Erfinder: Seipt, Rene, 09456 Annaberg-Buchholz (DE)
(74) Vertreter: Helge, Reiner

(57) **Zusammenfassung**

Einrichtung zum Entfernen von Anhaftungen an Fügewerkzeugen, insbesondere zum Entfernen von Anhaftungen an Schweißelektroden von robotermontierten Schweißzangen, wobei die Einrichtung (1) als Baugruppen eine Antriebs- und Getriebeeinheit (2), ein Reinigungswerkzeug (3) mit einem schnellwechselbaren Bürstenkäfig, ein Behälter (4) für ein Reinigungsfluid, eine Linearachse/Hubeinheit für das Reinigungswerkzeug (3), ein Drehantrieb (6) zum Schwenken des Reinigungswerkzeugs (3) und ein Gehäuse (7) zur Aufnahme einer Steuer-und Pneumatikeinheit umfasst.

## Beschreibung

Die Erfindung betrifft eine Einrichtung zum Entfernen von Anhaftungen an Fügewerkzeugen, die bei mechanischen und/oder thermischen Fügeverfahren, wie zum Beispiel beim Chincen, FDS-Schraubverbindungen, HSN Halb-Hohlstanznieten oder beim Widerstandspunktschweißen, bei denen Klebstoffe zwischen den zu verbindenden Bauteilen eingesetzt werden. Die Erfindung betrifft insbesondere eine Einrichtung zum mechanischen/chemischen Entfernen von Ablagerungen an Kappen von Schweißelektroden für das Widerstandspunktschweißen.

In der Industrie (Automobilindustrie) wird verstärkt Klebstoff bei mechanischen und thermischen Fügeverfahren eingesetzt. Der zwischen den Fügeteilen verdrängte austretende Klebstoff haftet am Fügewerkzeug an, was zu langen Reinigungsprozessen führt, welche die Verfügbarkeit der übergeordneten Anlage reduzieren. Da die Wartungsintervalle weit auseinanderliegen, kommt es zu starken Schmutzaufbau und vollständig ausgehärteten Kleberesten, was zu Störungen des Fügevorgangs führt.

Schweißzangen zum Widerstandspunktschweißen verwenden im Bereich der Berührung mit den Werkstücken als Schweißelektroden sogenannte aufgesetzte Kappen. Derartige Kappen sind häufig näpfchenartige Hohlteile, die über einen entsprechenden Konus auf den Träger der Schweißzangen aufgesetzt werden und somit fest mit der Schweißzange, gleichzeitig aber lösbar verbunden sind.

Die DE 10 2007 003 981 B4 bezieht sich auf eine Reinigungsanlage für ein in einer Schweißanlage montiertes Schweißgeräteteil, insbesondere für robotermontierte Schweißzangen, mit einer abgeschlossenen, von der Schweißanlage getrennten Reinigungskabine, mindestens einer in dieser angeordneten Halterung für das von der zugehörigen Schweißanlage demontierte, zu reinigende Schweißgeräteteil und einem in der Reinigungskabine eingeschlossenen Mehrachsroboter einschließlich mindestens einer robotergesteuert längs definierter Bewegungsbahnen relativ zur Halterung geführten Kaltstrahldüse.

Das zu reinigende Geräteteil wird von der zugehörigen Schweißgeräteeinheit, also vorzugsweise die Schweißzange vom Schweißroboter, getrennt und im demontierten Zustand in einer gesonderten, abgeschlossenen Reinigungskabine in eine entsprechende stationäre Halterung eingesetzt und dort mit Hilfe einer robotergeführten Trockeneis-Kaltstrahldüse von den anhaftenden Verunreinigungen, etwa Schweißspritzern und/oder Öl-oder Klebstoffrückständen, befreit. Auf diese Weise wird sichergestellt, dass nur das zu reinigende Geräteteil, nicht aber auch andere und insbesondere temperaturempfindliche Bereiche der Schweißgeräteeinheit einer Kaltstrahlwirkung ausgesetzt werden, während gleichzeitig ein ungehindertes Ausbreiten des hochgradig CO2-haltigen Luftgemisches über die Grenzen der Reinigungsstation hinaus wirksam unterbunden wird.

Die DE 10 2005 013 454 B4 betrifft das mechanischen Entfernen von Ablagerungen, insbesondere von Ablagerungen an Schweißelektroden für das Widerstandsschweißen, mittels einer Vorrichtung, die mindestens ein Schneidelement mit einer Hauptschneide aufweist, wobei der Hauptschneide mindestens eine Spanfläche und mindestens eine Freifläche zugeordnet sind und die Hauptschneide des Schneidelements jeweils im Bereich der Kante von aneinander angrenzender Spanfläche und Freifläche gebildet ist und Schneidelement und Werkstück eine Relativdrehung zueinander ausführen, wobei das Schneidelement zumindest im Bereich der Kante an der Hauptschneide einen Bereich aufweist, in dem der Spanwinkel zwischen O und 4° negativ ist und die Relativdrehzahl zwischen Schneidelement und Werkstück bei der Formgebung und/oder beim Entfernen der Ablagerungen im Bereich zwischen 400 und 1500 Umdrehungen je Minute beträgt und zwischen aufeinander folgenden formgebenden Bearbeitungen des Werkstückes ein- oder mehrmalig eine oberflächliche, polierende Reinigung zumindest von Teilbereichen der Oberfläche des Werkstückes erfolgt.

Die DE 10 2004 056 228 B4 beschreibt ein Verfahren zur Formgebung und/oder zum mechanischen Entfernen von Ablagerungen an Schweißelektroden für das Widerstandsschweißen, wobei die Schweißelektroden abschnittsweise scheibenförmig mit am Scheibenumfang ausgebildeten, radial abstehenden Schweißelementen ausgebildet sind und zwei derartige scheibenförmige Schweißelektroden einander gegenüberliegend und die zu verschweißenden Bauteile zumindest abschnittsweise zwischen sich aufnehmend mit den Schweißelementen die zu verschweißenden Bauteile gegeneinander pressen, elektrisch kontaktieren und verschweißen, wobei die einander gegenüberliegenden Kontaktflächen der Schweißelemente in einer Bearbeitungsvorrichtung definiert voneinander beabstandet an mindestens einem Positionierungselement positioniert werden und durch eine Vorschubbewegung an mindestens einem eine oder gleichzeitig beide Kontaktflächen reinigenden und/oder formgebenden Bearbeitungswerkzeug vorbeigeführt werden.

Die Bearbeitungsvorrichtung zur Formgebung und/oder zum mechanischen Entfernen von Ablagerungen an Schweißelektroden für das Widerstandsschweißen, umfasst ein Positionierungselement mit einer im wesentlichen parallelen Führungsschiene für jede der Kontaktflächen der sich gegenüberliegenden Schweißelemente der Schweißelektroden und als Bearbeitungswerkzeug einen entsprechend der Profilform der Schweißelemente profilierten Fräser, ein profiliertes Polierwerkzeug oder dgl., insbesondere ein Polierwerkzeug mit rotierender Polierfläche oder ein profiliertes, feilenartiges Werkzeug mit linearer Arbeitsbewegung ist.

Die EP 2 570 199 B1 betrifft eine Vorrichtung zum Befräsen des Schweißbereichs von Punkt-Schweiß-Elektroden, welche mindestens ein Fräswerkzeug umfasst, ist mit einer Reinigungseinheit versehen, welche zum Reinigen des Fräswerkzeugs ausgebildet ist und mindestens ein beweglich ausgebildetes mechanisches Reinigungselement, wie etwa eine Bürste, aufweist, welche mehrere Achsen umfasst, wodurch das mechanische Reinigungselement mehrere einer linearen, rotierenden oder schwenkenden Bewegung ausführt. Mit dem beweglich ausgebildeten mechanischen Reinigungselement kann das im Allgemeinen fest stehende Fräswerkzeug gereinigt werden. Die Reinigungseinheit und/oder die Achsen der Reinigungseinheit können durch eine oder mehrere einer mechanischen, pneumatischen oder elektrischen Komponente angetrieben werden.

Die WO 2013/037 893 A1 beschreibt eine Vorrichtung zum Befräsen des Schweißbereichs von Punkt-Schweiß-Elektroden, welche mindestens ein Fräswerkzeug umfasst und mit einer Reinigungseinheit versehen ist, welche dem Reinigen des Fräswerkzeugs dient und mindestens ein beweglich ausgebildetes mechanisches Reinigungselement, wie etwa eine Bürste, aufweist, welche mehrere Achsen umfasst, wodurch das mechanische Reinigungselement mehrere einer linearen, rotierenden oder schwenkenden Bewegung ausführt. Mit dem beweglich ausgebildeten mechanischen Reinigungselement kann das im Allgemeinen fest stehende Fräswerkzeug gereinigt werden. Die Reinigungseinheit und/oder die Achsen der Reinigungseinheit können durch eine oder mehrere einer mechanischen, pneumatischen oder elektrischen Komponente angetrieben werden.

Im Bereich etwa der Automobiltechnik oder sonstiger Fertigungsbereiche, in denen eine hohe Zahl von Schweißungen in kurzer Zeit durchgeführt werden muss, werden durch automatisierten Einrichtungen, wie beispielsweise Schweißroboter, entsprechende Schweißzangen an die Verbindungsstellen der Werkstücke heran gebracht und dort so miteinander auf Kontakt gefahren, dass die Werkstücke zu mindestens punktförmig aufeinander liegen. Durch den über die Schweißzangen auf die Werkstücke aufgebrachte Schweißstrom wird das Material des Werkstückes punktuell sehr stark erhitzt und verschweißt bleibend miteinander. Dabei ist es von zentraler Bedeutung, dass die Schweißzangen in ihrem Kontaktbereich möglichst immer identische Berührung mit den Werkstücken haben und dadurch gleichbleibende Schweißungen ausführen können.

Dabei muss neben dem Verschleiß auch der Verschmutzungsgrad durch Anhaftungen von Klebstoffresten an den Punkt-Schweiß-Elektroden berücksichtigt werden. Nach einer gewissen Anzahl von Schweißvorgängen sind Abbrand, Oxidschichten und Klebstoffresten, welche sich beim Schweißvorgang an den Elektroden anlagern, derart angewachsen, dass die Elektroden ihren effektiven Querschnitt verändern, und letztlich sich damit ihre elektrothermischen Eigenschaften ändern, was zu einer Verschlechterung der Qualität der Schweißpunkte führen kann.

Die Reinigung der Fügewerkzeuge erfolgt aktuell händisch bzw. manuell durch das Bedienpersonal. Während des Reinigungsprozesses steht die automatisierte Fügeanlage still und kann nicht produzieren.

Aufgabe der Erfindung ist es, eine Einrichtung zum Entfernen von Anhaftungen an Fügewerkzeugen, die bei mechanischen und/oder thermischen Fügeverfahren verwendet werden, insbesondere von auf den Enden der Widerstandsschweißzangen aufgesetzten Kappen zu schaffen, mit deren Hilfe die Verunreinigungen (Klebstoffanhaftungen) am Fügewerkzeug sicher zu entfernt und damit die Anlagenverfügbarkeit signifikant zu erhöht werden kann und somit Ausfallhäufigkeiten und Anlagenstillstand durch aufwendige händische Reinigungsprozesse entfallen.

Die Lösung der erfindungsgemäßen Aufgabe ergibt sich aus den kennzeichnenden Merkmalen des Anspruches 1 in Zusammenwirken mit den Merkmalen des Oberbegriffes. Weitere vorteilhafte Ausgestaltungen der Erfindung ergeben sich aus den Unteransprüchen.

Die Erfindung geht aus von einer Einrichtung zum mechanischen/chemischen Entfernen von Anhaftungen an Fügewerkzeugen, die bei mechanischen und/oder thermischen Fügeverfahren verwendet werden, insbesondere von auf den Enden der Widerstandsschweißzangen aufgesetzten Kappen, welches durch Integration in eine vollautomatisierte Fügezelle, die Fügewerkzeuge reinigt und die Verschmutzungen in regelmäßigen Intervallen automatisiert entfernt. Mittels der Einrichtung können zylindrische uns asymmetrische Fügewerkzeuge gereinigt werden.

Die Einrichtung zum Entfernen von Anhaftungen an Fügewerkzeugen, insbesondere zum Entfernen von an Schweißelektroden von robotermontierten Schweißzangen umfasst eine Antriebs- und Getriebeeinheit, eine Reinigungswerkzeug mit einem schnellwechselbarer Bürstenkäfig, einen Behälter für ein Reinigungsfluid, eine Linearachse/Hubeinheit und ein Drehantrieb zum Bewegen des Reinigungswerkzeuges und ein Gehäuse für die Aufnahme einer Steuer- und Pneumatikeinheit.

Über die Antriebs- und Getriebeeinheit wird das Reinigungswerkzeug angetrieben. Der Antriebsmotor kann elektrisch, pneumatisch, hydraulisch angetrieben sein und ist mit einem Getriebe mit variabler Drehmoment- Drehzahlübersetzung einschließlich Lagerung und einer Aufnahme für das Reinigungswerkzeug gekoppelt. Das Getriebe kann als Zahnradgetriebe, Zahnriemengetriebe oder als Kettengetriebe ausgeführt werden. Die Antriebs- und Getriebeeinheit ist zum Schutz vor Verschmutzungen in einem separaten Gehäuse untergebracht.

Das Reinigungswerkzeug ist als schnellwechselbarer Rotationskörper, vorzugsweise in Form als Rotationsbürsten, ausgeführt und ist in einem Gehäuse mit beidseitigen Öffnungen angeordnet. Durch einen Schnellwechselverschluss kann das Reinigungswerkzeug schnell uns sicher ausgetauscht werden. Im Reinigungswerkzeug befinden sich Reinigungselemente, welche je nach Verschmutzungsgrat unterschiedlich stark verschleißen. Die Reinigungselemente können ausgetauscht werden. Die Reinigungselemente können je nach Verschmutzungsgrad des zu reinigenden Fügewerkzeuges aus unterschiedlichen Materialien z.B. Kunststoff, Metall, Gummi, Flies etc. bestehen. Das Reinigungswerkzeug kann dabei rotieren, reversieren, eine lineare Bewegungen ausführen.

Der Behälter für das Reinigungsfluid ist durch Schnellwechselverschlüsse mit der Einrichtung verbunden und austauschbar. Die Abdeckung ist so ausgebildet, dass abtropfende Flüssigkeiten durch die geschlitzten und geneigten Öffnungen wieder zurück in den Behälter fließen können. Der Benetzungsprozess mit dem Reinigungsfluid für das Reinigungswerkzeug erfolgt durch Eintauchen, durch Besprühen, durch Betropfen oder dgl..

In der Zeit in der keine Reinigung der Schweißelektroden durchgeführt wird, kann eine Selbstreinigung des Reinigungswerkzeuges durchgeführt werden, in dem das Reinigungswerkzeug mit seinem schnellwechselbaren Bürstenkäfig in den Behälter mit dem Reinigungsfluid verfahren wird und in Drehung versetzt und gespült wird.

Die Linearachse/ Hubeinheit bewegt das Reinigungswerkzeug in den Behälter mit Reinigungsfluid. Der Antrieb kann elektrisch, pneumatisch oder hydraulisch erfolgen. Optional kann ein Drehantrieb zum Schwenken des Reinigungswerkzeugs in die gewünschte Lage zum Fügewerkzeug vorgesehen sein. Zur sicheren Ansteuerung der Linearachse/ Hubeinheit und des Drehantriebs ist eine Pneumatikeinheit, die die erforderliche Ventiltechnik umfasst, vorgesehen.

Der Steuereinheit dient zur Herstellung der Kompatibilität mit der kundenseitigen Medienschnittstelle. Diese beinhaltet die notwenigen Komponenten für die Ansteuerung, Regelung, Überwachung der Antriebs- und Getriebeeinheit. Darüber hinaus wird über die zusätzliche Sensorik der Füllstand, Achsen-Endlagenerkennung, Drehantrieb-Position, Motor- Drehkontrolle überwacht, die ermittelten Werte in der Steuereinheit verarbeitet, um die entsprechenden Baugruppen anzusteuern.

Das Fügewerkzeug kann sowohl vertikal als auch horizontal in das Reinigungswerkzeug eingeführt werden. Bevorzugt wird das Fügewerkzeug vertikal in das Reinigungswerkzeug eingeführt. Die optional verfügbare Dreheinheit ist für horizontale Anwendungsfälle erforderlich. Dabei weist die Reinigungsvorrichtung ein rotierendes Reinigungswerkzeug auf, dessen Rotationsachse mit der Achse des Fügewerkzeuges fluchtet. Zylindrische und asymmetrische Fügewerkzeuge können gereinigt werden. Dabei muss die Dimension des Reinigungswerkzeugs auf das zu reinigende Fügewerkzeug abgestimmt werden. Dies erfolgt durch im Bürstenkäfig des Reinigungswerkzeuges angeordnete austauschbare Reinigungseinsätze, die mittels Schnellverschluss eingesetzt werden.

Die Einrichtung zum Entfernen von Anhaftungen kann stationär auf einen festen Ständer montiert werden oder über ein Ablagesystem abgelegt sein und durch einen robotergeführten Handlingsgreifer zu stationären Fügewerkzeugen transportiert werden.

Die Vorteile der erfindungsgemäßen Einrichtung liegen in Möglichkeit der Einbindung in eine Automatisierungskette der Fügezelle, wobei die robotergeführte Schweißzange in die Reinigungsstation geführt wird und dadurch die Ausfallzeiten gegenüber dem händischem Reinigungsprozess der Zange reduziert.

Bei regelmäßigem Reinigungsintervall kann eine Anhäufung von Kleberresten auf den Schweißelektroden verringert werden, sodass keine Klebereste auf die zu verbindenden Teile, wie Karosserieteile tropfen können. Anhaftende Klebereste werden rechtzeitig entfernt bevor ein vollständiges Aushärten der Klebereste erfolgt.

Ein weiterer Vorteil liegt darin, dass der Behälter für das Reinigungsfluid und die Bürstenkäfige der Reinigungswerkzeuge mit Schnellwechselverschlüssen versehen sind und damit schnell und einfach wechselbar sind. Durch schwenk- bzw. drehbare Ausführungen sind die Einrichtungen auf die Lage/Position der Fügewerkzeuge anpassbar.

Durch die Einrichtung erfolgt keine Formgebung bzw. Materialabtrag an den Fügewerkzeugen sondern nur die Entfernung von Verschmutzungen.

Anhand eines Ausführungsbeispiels soll die Erfindung näher beschrieben werden. Es zeigen:
Figur 1 - erfingungsgemäße Einrichtung als Standgerät
Figur 2 - erfingungsgemäße Einrichtung als transportables Gerät
Figur 3 - Antriebs- und Getriebeeinheit

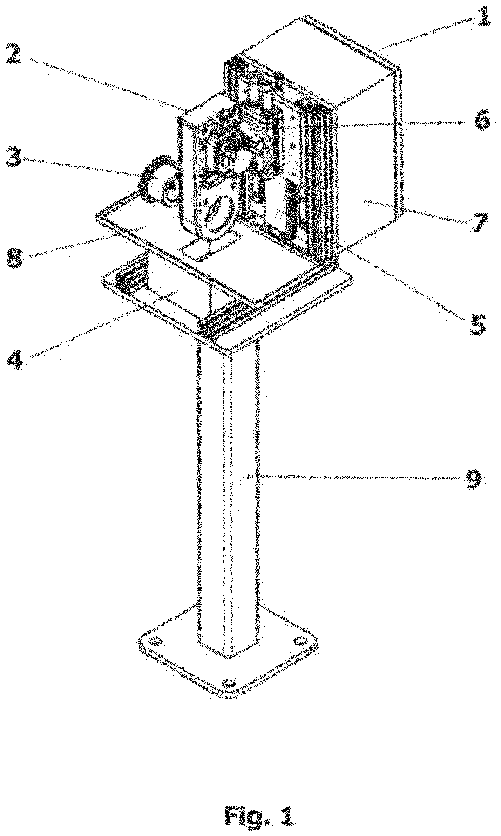

Die Figur 1 zeigt eine Einrichtung 1 zum mechanischen/chemischen Entfernen von Anhaftungen, insbesondere von Kleberresten, von auf den Enden der Widerstandsschweißzangen aufgesetzten Kappen, die als Standgerät ausgebildet ist.

Die Einrichtung 1 umfasst eine Antriebs- und Getriebeeinheit 2, ein Reinigungswerkzeug 3 mit einem schnellwechselbaren Bürstenkäfig zum mechanischen/chemischen Entfernen von Kleberückständen an den Schweißelektroden der Widerstandsschweißzangen, ein Behälter 4 mit Reinigungsfluid, eine Linearachse/Hubeinheit5, welche das Reinigungswerkzeug 3 zur Aufnahme des Reinigungsfluides durch die Öffnung der Behälterabdeckung 8 in das Reinigungsfluid befördert, einen optionalen Drehantrieb 6 zum Schwenken des Reinigungswerkzeuges 3 in die gewünschte Lage zur Widerstandsschweißzange, ein Gehäuse 7 für die Aufnahme einer Steuer- und Pneumatikeinheit und ein Standfuß 9, auf dem die Einrichtung 1 montiert ist.

Nach dem Benetzen des Reinigungswerkzeuges 3 mit dem Reinigungsfluid wird dieses in die Ausganglage verfahren und die Schweißzange mit den Elektroden im geöffneten Zustand in das Reinigungswerkzeug 3 eingeführt. Danach erfolgt das Reinigen der Kappen der Schweißelektroden durch rotierende Bürsten. Dabei können die gegenüberliegenden Kappen nacheinander oder gleichzeitig durch Schließen der Schweißzange gereinigt werden. Nach der Reinigung der Kappen kann die Schweißzange entnommen werden und Ihren Betrieb zum Punktschweißen wieder aufnehmen.

Die Ansteuerung der Bewegung der Reinigungswerkzeuge 3 erfolgt durch die im Gehäuse 7 angeordnete Steuereinheit. Die ebenfalls im Gehäuse 7 angeordnete Pneumatikeinheit dient zur Ansteuerung der Antriebselemente für die Einrichtung 1.

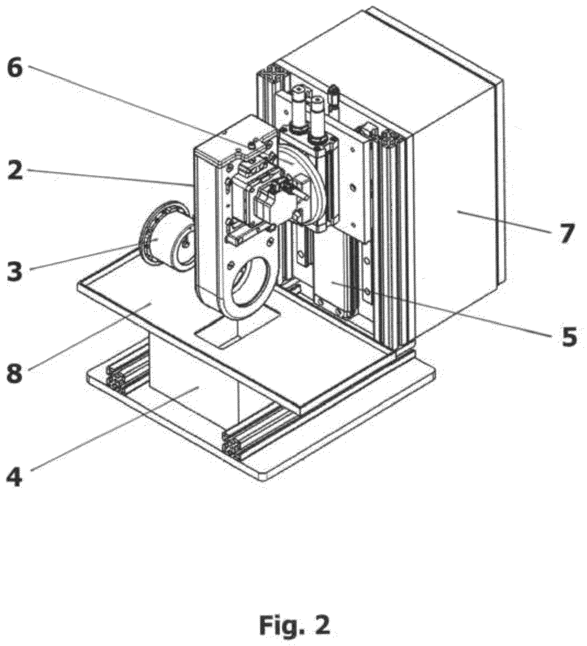

Die Figur 2 zeigt die erfingungsgemäße Einrichtung 1 als transportables Gerät. Die Einrichtung 1 kann über ein Ablagesystem durch einen robotergeführten Handlingsgreifer zu den an den stationären Schweißrobotern angebrachten Schweißzangen zur Reinigung der Schweißkappen transportiert werden.

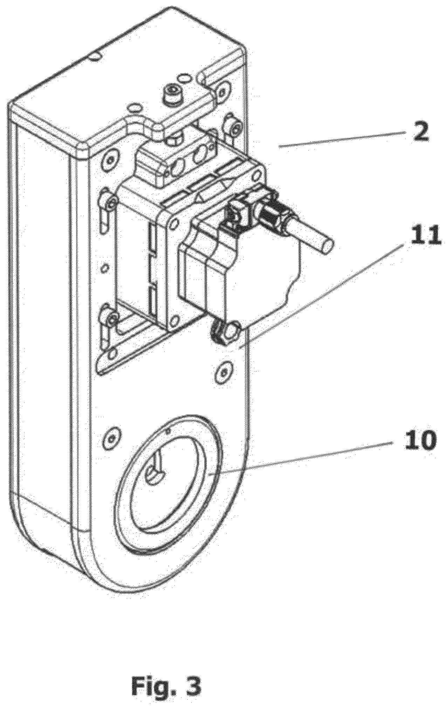

Die Figur 3 zeigt die Antriebs- und Getriebeeinheit 2 der Einrichtung 1, mit der das Reinigungswerkzeug 3 angetrieben wird. Der Antriebsmotor ist mit einem Getriebe mit variabler Drehmoment-/ Drehzahlübersetzung einschließlich Lagerung und einer Aufnahme für das Reinigungswerkzeug 3 gekoppelt. Die Antriebs- und Getriebeeinheit 2 ist zum Schutz vor Verschmutzungen in einem separaten Gehäuse 11 untergebracht, indem auch eine Aufnahme 10 für das Reinigungswerkzeug 3 vorgesehen ist

Durch die Einrichtung erfolgt keine Formgebung bzw. Materialabtrag an den Fügewerkzeugen. Schweißkappen sondern nur eine Kappenwäsche. Es ist auch keine Schließkraft der Schweißzange erforderlich (gegenüberliegende Elektroden müssen nicht zusammengedrückt werden. Die Reinigung der beiden gegenüberliegenden Elektroden kann gleichzeitig oder nacheinander (einzeln) erfolgen. Ausfallhäufigkeiten und Anlagenstillstand durch aufwendige händische Reinigungsprozesse entfallen.

### Bezugszeichenaufstellung

- 1: - Gesamtvorrichtung
- 2: - Antriebs- und Getriebeeinheit
- 3: - Reinigungswerkzeug
- 4: - Behälter
- 5: - Linearachse/ Hubeinheit
- 6: - Drehantrieb
- 7: - Gehäuse
- 8: - Behälterabdeckung
- 9: - Standfuß
- 10: - Aufnahme für Reinigungswerkzeug

## Patentansprüche

1. Einrichtung zum Entfernen von Anhaftungen an Fügewerkzeugen insbesondere zum Entfernen von Anhaftungen an Schweißelektroden von robotermontierten Schweißzangen, **dadurch gekennzeichnet, dass** die Einrichtung (1) als Baugrippen eine Antriebs-und Getriebeeinheit (2) ein Reinigungswerkzeug (3) mit einem schnellwechselbaren Bürstenkäfig, ein Behälter (4) für ein Reinigungsfluid, eine Lineareinheit/ Hubeinheit (5) für das Reinigungswerkzeug (3), ein Drehantrieb(6) zum Schwenken des Reinigungswerkzeug (3) und ein Gehäuse (7) zur Aufnahme einer Steuer, -und Pneumatikeinheit umfasst.

2. Einrichtung nach Anspruch 1, **dadurch gekennzeichnet, dass** die Antriebs- und Getriebeeinheit (2) zum Antrieb des Reinigungswerkzeuges (3) einen elektrisch, pneumatisch oder hydraulischen Antriebsmotor umfasst, der mit einem Getriebe mit variablen Drehmoment/Drehzahlübersetzung und einer Aufnahme (10) für das Reinigungswerkzeug (3) gekoppelt ist.

3. Einrichtung nach Anspruch 1 und 2, **dadurch gekennzeichnet, dass** das Reinigungswerkzeug (3) als schnellwechselbare Rotationskörper ausgebildet ist und in einem Gehäuse (11) mit beidseitigen Öffnungen angeordnet ist, wobei sich im Inneren austauschbare Reinigungselemente befinden.

4. Einrichtung nach Anspruch 1 bis 3, **dadurch gekennzeichnet, dass** das Reinigungswerkzeug (3) eine rotierende reversierende oder lineare Bewegung aufführen kann.

5. Einrichtung nach Anspruch 1 bis 4, **dadurch gekennzeichnet, dass** der Behälter (4) für das Reinigungsfluid mittels Schnellwechselverschlüssen an der Einrichtung befestigbar ist und mit einer geneigten und geschlitzter Behälterabdeckung (8) versehen ist.

6. Einrichtung nach Anspruch 1 bis 5, **dadurch gekennzeichnet, dass** das Reinigungswerkzeug (3) mittels der Linearachse/ Hubeinheit (5) in den Behälter (4) mit dem Reinigungsfluid bewegbar ist, wobei der Antrieb elektrisch, hydraulisch oder pneumatisch erfolgen kann.

7. Einrichtung nach Anspruch 1 bis 6, **dadurch gekennzeichnet, dass** zum Schwenken des Reinigungswerkzeuges (3) ein Drehantrieb (6) vorgesehen ist.

8. Einrichtung nach Anspruch 1 bis 7, **dadurch gekennzeichnet , dass** zur Ansteuerung der Linearachse/Hubeinheit (5) und des Drehantriebs (6) eine Pneumatikeinheit vorgesehen ist.

9. Einrichtung nach Anspruch 1 bis 8, **dadurch gekennzeichnet, dass** die Einrichtung (1) eine Steuereinheit zur Herstellung der Kompatibilität mit der kundenseitigen Medienschnittstelle umfasst.

10. Einrichtung nach Anspruch 1 bis 9, **dadurch gekennzeichnet, dass** die Einrichtung (1) stationär auf einem Ständer montiert.

11. Einrichtung nach Anspruch 1 bis 10, **dadurch gekennzeichnet, dass** die Einrichtung (1) transportabel ausgebildet ist und durch einen robotergeführten Handlingsgreifer zu den entsprechenden Fügewerkzeugen gebracht werden kann.
